(19) Europäisches Patentamt
European Patent Office
Office européen des brevets

(11) **EP 3 812 154 B1**

(12) **EUROPÄISCHE PATENTSCHRIFT**

(45) Veröffentlichungstag und Bekanntmachung des Hinweises auf die Patenterteilung:
**17.05.2023 Patentblatt 2023/20**

(21) Anmeldenummer: **19204249.7**

(22) Anmeldetag: **21.10.2019**

(51) Internationale Patentklassifikation (IPC):
*B22F 1/052* (2022.01)    *B22F 1/065* (2022.01)
*B22F 3/11* (2006.01)    *B22F 10/20* (2021.01)
*B22F 10/28* (2021.01)    *B33Y 10/00* (2015.01)
*B33Y 70/00* (2020.01)    *C22C 1/04* (2023.01)
*C22C 5/04* (2006.01)    *B01J 23/44* (2006.01)
*B01J 23/46* (2006.01)    *B01J 23/652* (2006.01)
*B01J 23/89* (2006.01)    *B01J 35/00* (2006.01)
*B01J 35/04* (2006.01)    *B01J 35/06* (2006.01)
*B01J 37/02* (2006.01)    *B01J 37/34* (2006.01)

(52) Gemeinsame Patentklassifikation (CPC):
(C-Sets verfügbar)
**B22F 10/20; B01J 23/44; B01J 23/462;
B01J 23/464; B01J 23/468; B01J 23/6527;
B01J 23/892; B01J 35/0006; B01J 35/04;
B01J 35/06; B01J 37/0225; B01J 37/0228;
B01J 37/344; B22F 1/052; B22F 1/065;** (Forts.)

(54) **VERFAHREN ZUR HERSTELLUNG EINES KATALYSATORSYSTEMS FÜR GASREAKTIONEN**

METHOD FOR MAKING A CATALYST SYSTEM FOR GAS REACTIONS

PROCÉDÉ DE FABRICATION D'UN SYSTÈME DE CATALYSEUR POUR RÉACTIONS GAZEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.04.2021 Patentblatt 2021/17**

(73) Patentinhaber: **Heraeus Deutschland GmbH & Co. KG**
**63450 Hanau (DE)**

(72) Erfinder:
• BOLL, Willi
  **63450 Hanau (DE)**
• HUMM, Stephan
  **63450 Hanau (DE)**
• HUBERT, Peter
  **63450 Hanau (DE)**
• HIRSCHEL, Pascal
  **63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(56) Entgegenhaltungen:
**EP-A1- 0 504 723      EP-A1- 3 216 545
WO-A1-2012/032325   DE-T2- 60 201 502
US-A1- 2018 333 704**

(52) Gemeinsame Patentklassifikation (CPC): (Forts.)
**B22F 3/11; B22F 3/1103; B22F 10/28; B33Y 10/00;**
**B33Y 70/00; C22C 1/0466; C22C 5/04;**
B01J 2523/00; B22F 10/60; B22F 10/73;
B22F 12/41; B22F 2998/10; B22F 2999/00;
Y02P 10/25

C-Sets
B01J 2523/00, B01J 2523/822, B01J 2523/824,
B01J 2523/828;
B22F 2999/00, B22F 1/06, B22F 1/065,
C22C 1/0466;

B22F 2999/00, B22F 3/1103, C22C 1/0466,
B22F 10/20

## Beschreibung

Die Erfindung betrifft ein Verfahren zur Herstellung eines Katalysatorsystems für Gasreaktionen.

WO 2012/032325 A1 offenbart die Herstellung eines Katalysators mittels additiver Fertigung. In einer der offenbarten Ausführungsformen kann der Katalysator aus Edelmetallpulver additiv gefertigt werden.

Hierin wird der Begriff der "additiven Fertigung" verwendet. Über additive Fertigungsverfahren lassen sich Bauteile mit komplexer dreidimensionaler Geometrie direkt herstellen. "Additive Fertigung" bezeichnet einen Prozess, bei dem auf der Basis von digitalen 3D-Konstruktionsdaten durch das Ablagern von pulverförmigem Material schichtweise ein Bauteil aufgebaut wird. Beispiele für dem Fachmann bekannte additive Herstellungsverfahren sind selektives Lasersintern (SLS), selektives Laserschmelzen (SLM), selektives Elektronenstrahlschmelzen. Üblicherweise wird zunächst eine dünne Schicht des Pulverwerkstoffs auf eine Bauplattform aufgetragen. Über einen ausreichend hohen Energieeintrag, beispielsweise in Form eines Laser- oder Elektronenstrahls, wird das Pulver an den Stellen zumindest teilweise aufgeschmolzen, die die computergenerierten Konstruktionsdaten vorgeben. Danach wird die Bauplattform abgesenkt und es erfolgt ein weiterer Pulverauftrag. Die weitere Pulverschicht wird erneut zumindest teilweise aufgeschmolzen und verbindet sich an den definierten Stellen mit der darunterliegenden Schicht. Diese Schritte werden so häufig wiederholt, bis das Bauteil in seiner finalen Form vorliegt.

DE 602 01 502 T2 und EP 0 504 723 A1 offenbaren jeweils dreidimensionale Katalysatornetze.

Aufgabe der Erfindung ist es ausgehend von WO 2012/032325 A1 als nächstliegendem Stand der Technik ein Verfahren zu entwickeln, welches eine flexible Herstellung eines Edelmetallkatalysatorsystems für Gasreaktionen, erlaubt.

Der hierin verwendete Begriff "Gasreaktionen" bezieht sich auf chemische Reaktionen zwischen gasförmigen Reaktionspartnern unter Bildung eines oder mehrerer gasförmiger Reaktionsprodukte. Im Zusammenhang mit dem erfindungsgemäßen Verfahren bezieht sich der Begriff "Gasreaktionen" insbesondere auf die Herstellung von Blausäure nach dem Andrussow-Verfahren und um die Herstellung von Stickoxid nach dem Ostwald-Verfahren. Beim Andrussow-Verfahren werden Methan, Ammoniak und Sauerstoff zu Blausäure umgesetzt, während beim Ostwald-Verfahren Ammoniak mit Sauerstoff zu Stickoxid oxidiert wird, welches zur Salpetersäureproduktion dient. Bei beiden Verfahren handelt es sich um heterogen edelmetallkatalysierte Gasreaktionen. Das Frischgas wird dabei durch ein hintereinander angeordnete Katalysatornetze umfassendes Katalysatorsystem senkrecht zu dessen Strömungsrichtung geleitet und reagiert beim Durchströmen der Netzmaschen unter Bildung der Zielprodukte Blausäure bzw. Stickoxid. Die Katalysatornetze bestehen aus ein- oder mehrlagigen Gestricken, Gewirken oder Geweben aus feinen Edelmetalldrähten.

Die Erfindung betrifft ein Verfahren zur Herstellung eines Katalysatorsystems für Gasreaktionen gemäß dem beigefügten Anspruch 1.

In Schritt (1) des erfindungsgemäßen Verfahrens wird mindestens ein Edelmetallpulver bereitgestellt. Werden mehr als ein Edelmetallpulver bereitgestellt, bedeutet dies, dass sich die bereitgestellten Edelmetallpulver jeweils hinsichtlich der Art ihrer Legierungszusammensetzung und/oder hinsichtlich ihrer Partikelgrößenverteilung voneinander unterscheiden.

Es ist wesentlich, dass die Edelmetallpartikel des oder der in Schritt (1) bereitgestellten Edelmetallpulver zumindest im Wesentlichen sphärisch sind.

Als Maß für die Sphärizität eines Partikels kann in erster Näherung das Verhältnis seines minimalen Durchmessers $d_{min}$ zu seinem maximalen Durchmesser $d_{max}$ angesehen werden. Je näher dieser Wert bei 1,0 liegt, desto höher die Sphärizität des Partikels.

Demnach genügen, bezogen auf ihre Anzahl, mindestens 80%, noch bevorzugter mindestens 90%, und insbesondere 99 bis 100% der Edelmetallpartikel der folgenden Bedingung:

$$0,8 \leq d_{min}/d_{max} \leq 1,0;$$

wobei $d_{min}$ der minimale Durchmesser und $d_{max}$ der maximale Durchmesser eines individuellen Edelmetallpartikels sind.

Geeignete Verfahren für die Herstellung von zumindest im Wesentlichen sphärischen Edelmetallpartikeln sind dem Fachmann prinzipiell bekannt. Bevorzugt erfolgt die Herstellung des Pulvers aus Edelmetallpartikeln respektive der Edelmetallpartikel durch ein Verdüsungsverfahren, insbesondere eine Gasverdüsung (z.B. unter Verwendung von Stickstoff oder einem Edelgas wie Argon oder Helium als Verdüsungsgas), eine Plasmaverdüsung, eine Zentrifugalverdüsung oder eine tiegellose Verdüsung (z.B. ein als "Rotating-Electrode"-Prozess (REP) bezeichnetes Verfahren, insbesondere ein "Plasma-Rotating-Electrode"-Prozess (PREP). Ein weiteres beispielhaftes Verfahren ist das EIGA-Verfahren ("Electrode Induction-Melting Gas Atomisation"), induktives Aufschmelzen des Ausgangsmaterials in Gestalt einer betreffenden der vorerwähnten Edelmetalllegierungen und anschließende Gasverdüsung.

Bei der Gasverdüsung wird das Ausgangsmaterial unter einer Luft- oder Schutzgasglocke oder im Vakuum geschmolzen. Die Kammer wird dann mit Gas gefüllt, um das geschmolzene Edelmetall durch die Düse zu treiben, wo ein Verdüsungsgas (z.B. Stickstoff oder ein Edelgas wie Helium oder Argon) mit hoher Geschwindigkeit auf die fließende Schmelze auftrifft und diese aufbricht. Es entstehen zumindest im Wesentlichen sphärische Edelmetalltröpfchen, die dann zu zumindest im Wesentlichen sphärischen Edelmetallpartikeln erstarren.

Bei der Plasmaverdüsung wird das Ausgangsmaterial einem Plasmabrenner zugeführt, der das Edelmetallpulver mit Hilfe eines Gases verdüst.

Bei der Zentrifugalverdüsung werden Schmelztröpfchen von einer rotierenden Quelle weggeschleudert und erstarren zu zumindest im Wesentlichen sphärischen Edelmetallpartikeln.

Bei der tiegelfreien Verdüsung unter Verwendung einer rotierenden Elektrode ("REP") rotiert ein Edelmetallstab mit hoher Umdrehungsgeschwindigkeit, wobei sein freies Ende nach und nach, z.B. durch einen Elektronenstrahl, einen Lichtbogen oder ein Plasma, abgeschmolzen wird. Schmelztröpfchen werden von dem rotierenden Edelmetallstab weggeschleudert und erstarren zu zumindest im Wesentlichen sphärischen Edelmetallpartikeln. Der Edelmetallstab kann dabei um eine horizontale oder um eine vertikale Achse rotieren.

Bevorzugt erfolgt die Verdüsung mit einem Inertgas (z.B. Stickstoff oder ein Edelgas wie Argon).

Bevorzugt erfolgt die Verdüsung unter Ausschluss von Sauerstoff oder zumindest in der Anwesenheit von nur sehr geringen Sauerstoffmengen. Es ist daher bevorzugt, dass bei der Verdüsung weniger als 5 Vol-ppm Sauerstoff im Gasvolumen anwesend sind.

Es ist ferner wesentlich, dass die zumindest im Wesentlichen sphärischen Edelmetallpartikel des oder der Edelmetallpulver eine Partikelgrößenverteilung mit einem $d_{10}$-Wert von $\geq 5$ $\mu$m und einem $d_{90}$-Wert von $\leq 80$ $\mu$m aufweisen. Bevorzugt liegt der $d_{50}$-Wert dabei im Bereich von 20 bis 30 $\mu$m. Im Rahmen der vorliegenden Erfindung wird die Partikelgrößenverteilung in Form einer Massenverteilungssummenkurve durch Laserbeugung bestimmt.

In einer bevorzugten Ausführungsform sind der $d_{10}$-Wert $\geq 10$ $\mu$m, insbesondere im Bereich von $\geq 10$ $\mu$m bis $\leq 20\mu$m und der $d_{90}$-Wert $\leq 45$ $\mu$m, insbesondere im Bereich von $\geq 30$ $\mu$m bis $\leq 45$ $\mu$m.

Um eine Partikelgrößenverteilung mit besagten definierten $d_{10}$- und $d_{90}$-Werten zu erhalten, können die über die Verdüsung erhaltenen Edelmetallpartikel anschließend einem Klassierungsverfahren wie z.B. Sieben, Windsichten oder Zentrifugieren unterzogen werden.

Es können auch zwei oder mehr dieser Klassierungsverfahren hintereinander geschaltet werden, um eine möglichst genaue Einstellung der Partikelgrößenverteilung zu erzielen. Beispielsweise können zunächst eine oder mehrere Siebungen und anschließend eine oder mehrere Windsichtungen durchgeführt werden.

Wie schon vorerwähnt ist das Edelmetall der Edelmetallpartikel des oder der Edelmetallpulver ausgewählt aus der Gruppe bestehend aus Legierungen von

Platin mit 1-15 Gew.-% Rhodium,
Platin mit 2-15 Gew.-% Rhodium und 0,1-20 Gew.-% Palladium,
Platin mit 2-15 Gew.-% Rhodium, 0,1-20 Gew.-% Palladium und 0,1-2 Gew.-% Ruthenium,
Platin mit 2-15 Gew.-% Rhodium, 0,1-20 Gew.-% Palladium und 0,1-5 Gew.-% Iridium,
Palladium mit 3-15 Gew.-% Platin,
Palladium mit 1-20 Gew.-% Platin und 1-10 Gew.-% Rhodium,
Palladium mit 1-25 Gew.-% Wolfram, und
Palladium mit 1-15 Gew.-% Nickel.

In einer Ausführungsform des erfindungsgemäßen Verfahrens wird nur ein Edelmetallpulver respektive nur eine Art von Edelmetallpulver in Schritt (1) bereitgestellt und das Katalysatorsystem wird demzufolge aus einer einzigen Edelmetalllegierung additiv gefertigt. Bei dieser Ausführungsform kann nicht geschmolzenes Edelmetallpulver sortenrein zurückgewonnen und gegebenenfalls direkt wiederverwendet werden. Hier besteht das im erfindungsgemäßen Verfahren durch additive Fertigung hergestellte Katalysatorsystem aus der dementsprechenden Edelmetalllegierung.

In anderen Ausführungsformen des erfindungsgemäßen Verfahrens werden mehrere sich bezüglich der Legierungszusammensetzung voneinander unterscheidende Arten von Edelmetallpulver in Schritt (1) bereitgestellt und das Katalysatorsystem wird demzufolge aus mehreren verschiedenen der vorerwähnten Edelmetalllegierungen additiv gefertigt bzw. es besteht nach Abschluss der additiven Fertigung daraus. Hier wird nicht geschmolzenes Edelmetallpulver nicht sortenrein, d.h. als Gemisch verschiedener Edelmetallpulver zurückgewonnen, welches einem üblichen Edelmetallrecycling zugeführt werden kann. Hier besteht das im erfindungsgemäßen Verfahren durch additive Fertigung hergestellte Katalysatorsystem teilweise aus einer ersten Edelmetalllegierung und teilweise aus mindestens einer davon verschiedenen Edelmetalllegierung. Das kann beispielsweise bedeuten, dass das Katalysatorsystem mehrere gasdurchlässige Öffnungen aufweisende Edelmetallflächengebilde umfasst, wobei die einzelnen Edelmetallflächengebilde nicht alle aus der gleichen Edelmetalllegierung bestehen. Beispielsweise können die einzelnen Edelmetallflächengebilde zumindest zum Teil aus voneinander verschiedenen Edelmetalllegierungen, beipielsweise jeweils aus einer anderen Edelmetalllegierung bestehen. Es können auch innerhalb eines einzelnen Edelmetallflächengebildes verschiedene Edelmetalllegierungen verarbeitet sein.

Die eigentliche additive Fertigung findet während Schritt (2) statt, insbesondere als 3D-Druckverfahren. Dabei werden digitale 3D-Konstruktionsdaten des Katalysatorsystems genutzt, beispielsweise in Form von CAD-Daten oder von Datenformaten des betreffenden 3D-Drucksystem-Herstellers. Über die Wahl der digitalen 3D-Konstruktionsdaten können, wie in der weiteren Folge noch erläutert wird, diverse strukturelle Merkmale des Katalysatorsystems respektive des von ihm umfassten mindestens einen gasdurchlässige Öffnungen aufweisenden Edelmetallflächengebildes bestimmt werden.

In Schritt (2) werden das oder die in Schritt (1) bereitgestellten Edelmetallpulver wiederholt schichtweise auf einem Substrat in einem Bauraum aufgebracht, jeweils gefolgt von einem zumindest teilweise Aufschmelzen des jeweiligen als Schicht aufgebrachten Edelmetallpulvers mit energiereicher Strahlung und Erstarren lassen des aufgeschmolzenen Edelmetallpulvers im Rahmen einer additiven Fertigung. Die Anzahl der Wiederholungen richtet sich naturgemäß nach Art und Größe des im erfindungsgemäßen Verfahren herzustellenden Katalysatorsystems.

Üblicherweise wird der Bauraum zunächst evakuiert oder mit einem inerten Gas (z.B. Stickstoff oder einem Edelgas) befüllt.

Bei der energiereichen Strahlung kann es sich beispielsweise um Laser- oder Elektronenstrahlen handeln. Als Laser eignen sich insbesondere Nahinfrarotlaser beispielsweise mit einer Wellenlänge im Bereich von 1040 bis 1080 nm. Bevorzugt wird mit einem 3D Laserdrucker gearbeitet; dessen Laserspot kann einen Durchmesser zweckmäßig im Bereich von 10 $\mu$m bis 150 $\mu$m aufweisen.

Am Ende des Verfahrens kann freies bzw. loses nichtgeschmolzenes Edelmetallpulver vom Bauteil, d.h. vom Katalysatorsystem entfernt werden.

Im erfindungsgemäßen Verfahren wird ein Katalysatorsystem für Gasreaktionen umfassend mindestens ein gasdurchlässige Öffnungen aufweisendes Edelmetallflächengebilde hergestellt. Das Katalysatorsystem für Gasreaktionen kann ein, mehrere gleiche oder mehrere verschiedene Edelmetallflächengebilde umfassen oder daraus bestehen. "Mehrere verschiedene Edelmetallflächengebilde" kann bedeuten, dass die Verschiedenheit in der Art der Edelmetalllegierungen und/oder in strukturellen Merkmalen besteht. Das eine, die mehreren gleichen oder die mehreren verschiedenen Edelmetallflächengebilde können ein vollständiges Katalysatorsystem für Gasreaktionen oder ein Katalysatorsubsystem im Sinne eines Teils eines vollständigen Katalysatorsystems für Gasreaktionen darstellen. Beispielsweise kann es sich um eine einzelne Netzlage oder ein Netzpaket aus zwei oder mehr beispielsweise bis zu 40 Netzlagen handeln.

Das oder die im erfindungsgemäßen Verfahren als Katalysatorsystem oder Teil davon hergestellten individuellen Edelmetallflächengebilde weisen ein Flächengewicht beispielsweise im Bereich von 25 bis 2500 g/m$^2$ oder im Bereich von 75 bis 1000 g/m$^2$ auf.

Bei einem gasdurchlässige Öffnungen aufweisenden Edelmetallflächengebilde im Sinne der vorliegenden Erfindung kann es sich beispielsweise um jeweils ebene (nichtgebogene) Gegenstände wie beispielsweise Gitter, Lochplatten, Siebe oder bevorzugt Netze (einzelne Netzlagen) handeln. Das Edelmetallflächengebilde kann eine Flächenausdehnung von bis zu mehreren Quadratmetern aufweisen, beispielsweise im Bereich von 0,25 bis 35 Quadratmeter; bei einer Kreisform kann der Durchmesser des Edelmetallflächengebildes beispielsweise bis zu 6,5 Meter betragen. Bei Betrachtung des Edelmetallflächengebildes von oben bildet die Gesamtheit der gasdurchlässigen Öffnungen innerhalb eines einzelnen Edelmetallflächengebildes üblicherweise ein gleichmäßiges sich regelmäßig wiederholendes Muster aus. Ebenfalls bei Betrachtung des Edelmetallflächengebildes von oben weisen benachbarte gasdurchlässige Öffnungen oder Netzmaschen einen vom Edelmetall gebildeten gleichmäßigen oder variablen Randabstand beispielsweise im Bereich von 30 bis 200 $\mu$m auf. Sowohl bei Muster, Randabstand, Größe als auch bei der Form der Öffnungen - jeweils bei Betrachtung des Edelmetallflächengebildes von oben - handelt es sich um strukturelle Merkmale, die durch die Wahl vorerwähnter digitaler 3D-Konstruktionsdaten bestimmt werden können.

Im bevorzugten Fall eines mit dem erfindungsgemäßen Verfahren hergestellten gasdurchlässige Öffnungen aufweisenden Edelmetallflächengebildes in Form eines Netzes kann dieses beispielsweise eine einem Gewebe, einem Gestrick oder einem Gewirk nachempfundene Struktur haben. Insbesondere stellen die Maschen dabei die gasdurchlässigen Öffnungen dar. Die Struktur des Netzes kann dabei so sein, als basiere sie auf Runddraht. Es ist aber auch möglich, die Struktur des Netzes so auszubilden, als basiere sie auf Draht mit anderer als runder, also beispielsweise elliptischer, rechteckiger, quadratischer oder sechseckiger Querschnittsform. Die Drahtquerschnittsfläche kann querschnittsformunabhängig beispielsweise im Bereich von 400 bis 22500 $\mu$m$^2$ liegen. Im Fall von Runddraht kann der Querschnitt durch einen Durchmesser beispielsweise im Bereich von 30 $\mu$m bis 150 $\mu$m bestimmt sein; beispielsweise korrespondiert der Fall eines Runddrahtes mit einem Durchmesser von 30 $\mu$m mit einem Flächengewicht am unteren Ende der vorerwähnten Bereiche von 25 bis 2500 g/m$^2$ respektive von 75 bis 1000 g/m$^2$. Sowohl bei der Art der Netzstruktur, der Querschnittsform als auch der Querschnittsfläche handelt es sich um strukturelle Merkmale, die durch die Wahl der digitalen 3D-Konstruktionsdaten bestimmt werden können. Beispielsweise kann auch eine Netzstruktur geschaffen werden, als basiere sie nicht auf nur einer Drahtsorte sondern auf zwei oder mehr Drähten mit jeweils verschiedenen Querschnitten hinsichtlich Querschnittsform und/oder Querschnittsfläche.

Ferner kann im Rahmen der additiven Fertigung durch die Wahl digitaler 3D-Konstruktionsdaten Einfluss genommen werden auf Eigenschaften wie Oberflächenrauigkeit, Porosität und/oder Massivität des Edelmetallmaterials des oder der gasdurchlässige Öffnungen aufweisenden Edelmetallflächengebilde. So kann die Oberfläche des Edelmetallmaterials mehr oder minder rau ausgeprägt sein, das Edelmetallmaterial kann porenfrei oder mehr oder minder porös sein. Ab einem bestimmten Querschnitt des Edelmetallmaterials kann letzteres auch innen hohl sein.

Wie aus dem Vorerwähnten folgt, erlaubt das erfindungsgemäße Verfahren eine flexible Herstellung eines Katalysatorsystems für Gasreaktionen umfassend mindestens ein gasdurchlässige Öffnungen aufweisendes Edelmetallflächengebilde gegebenenfalls mit strukturellen Merkmalen, die mittels herkömmlicher Herstellungsverfahren des Standes der Technik (Stricken, Wirken, Weben) nicht verwirklicht werden können. So kann beispielsweise eine strömungsmechanisch optimierte Struktur hergestellt werden.

Besonders hervorzuheben ist, dass es das erfindungsgemäße Verfahren auch erlaubt, eine hohe katalytisch wirksame Oberfläche eines betreffenden Katalysatorsystems zu verwirklichen bei - falls gewünscht - zugleich minimalem Edelmetalleinsatz. Die in Schritt (2) im Rahmen der eigentlichen additiven Fertigung verwendeten digitalen 3D-Konstruktionsdaten können neben der vorerwähnten Einflussnahme auf vorerwähnte strukturelle Merkmale des Katalysatorsystems so gewählt werden, dass ein Katalysatorsystem mit ökonomisch effizientem Verhältnis von Edelmetalleinsatz zu hoher katalytisch wirksamer Oberfläche ausgebildet wird. Mit anderen Worten, es lässt sich eine Edelmetallersparnis erzielen im Vergleich zur Fertigung eines entsprechenden Katalysatorsystems mittels herkömmlicher Herstellungsverfahren des Standes der Technik (Stricken, Wirken, Weben).

**Patentansprüche**

1. Verfahren zur Herstellung eines Katalysatorsystems für Gasreaktionen umfassend mindestens ein gasdurchlässige Öffnungen aufweisendes Edelmetallflächengebilde, umfassend die Schritte:

   (1) Bereitstellen mindestens eines aus zumindest im Wesentlichen sphärischen Edelmetallpartikeln bestehenden Edelmetallpulvers, und
   (2) wiederholt schichtweises Aufbringen des oder der in Schritt (1) bereitgestellten Edelmetallpulver auf einem Substrat in einem Bauraum jeweils gefolgt von einem zumindest teilweise Aufschmelzen des jeweiligen als Schicht aufgebrachten Edelmetallpulvers mit energiereicher Strahlung und Erstarren lassen des aufgeschmolzenen Edelmetallpulvers im Rahmen einer additiven Fertigung,
   wobei das oder jedes der gasdurchlässige Öffnungen aufweisenden Edelmetallflächengebilde ein individuelles Flächengewicht im Bereich von 25 bis 2500 g/m$^2$ aufweist,
   wobei mindestens 80% der Edelmetallpartikel, bezogen auf ihre Anzahl, der Bedingung

   $$0,8 \leq d_{min}/d_{max} \leq 1,0$$

   genügen, wobei $d_{min}$ der minimale Durchmesser und $d_{max}$ der maximale Durchmesser eines individuellen Edelmetallpartikels sind und wobei die Edelmetallpartikel des oder der Edelmetallpulver eine Partikelgrößenverteilung mit einem dio-Wert von $\geq 5$ $\mu$m und einem $d_{90}$-Wert von $\leq 80$ $\mu$m aufweisen, wobei die Partikelgrößenverteilung in Form einer Massenverteilungssummenkurve durch Laserbeugung bestimmt wird und wobei das Edelmetall der Edelmetallpartikel des oder der Edelmetallpulver ausgewählt ist aus der Gruppe bestehend aus Edelmetalllegierungen von
Platin mit 1-15 Gew.-% Rhodium,
Platin mit 2-15 Gew.-% Rhodium und 0,1-20 Gew.-% Palladium,
Platin mit 2-15 Gew.-% Rhodium, 0,1-20 Gew.-% Palladium und 0,1-2 Gew.-% Ruthenium,
Platin mit 2-15 Gew.-% Rhodium, 0,1-20 Gew.-% Palladium und 0,1-5 Gew.-% Iridium,
Palladium mit 3-15 Gew.-% Platin,
Palladium mit 1-20 Gew.-% Platin und 1-10 Gew.-% Rhodium,
Palladium mit 1-25 Gew.-% Wolfram, und
Palladium mit 1-15 Gew.-% Nickel.

2. Verfahren nach Anspruch 1 wobei die Edelmetallpartikel durch ein Verdüsungsverfahren hergestellt sind.

3. Verfahren nach einem der vorhergehenden Ansprüche, wobei der $d_{50}$-Wert der Partikelgrößenverteilung im Bereich von 20 bis 30 $\mu$m liegt.

4. Verfahren nach einem der vorhergehenden Ansprüche, wobei der dio-Wert $\geq 10$ $\mu$m und der $d_{90}$-Wert $\leq 45$ $\mu$m ist.

5. Verfahren nach Anspruch 5, wobei der $d_{10}$-Wert im Bereich von $\geq 10$ $\mu$m bis $\leq 20\mu$m und der $d_{90}$-Wert im Bereich von $\geq 30$ $\mu$m bis $\leq 45$ $\mu$m liegt.

6. Verfahren nach einem der vorhergehenden Ansprüche, wobei das Katalysatorsystem ein, mehrere gleiche oder mehrere verschiedene Edelmetallflächengebilde umfasst oder daraus besteht, und wobei das eine, die mehreren gleichen oder die mehreren verschiedenen Edelmetallflächengebilde ein vollständiges Katalysatorsystem für Gasreaktionen oder ein Katalysatorsubsystem im Sinne eines Teils eines vollständigen Katalysatorsystems für Gasreaktionen darstellen.

7. Verfahren nach einem der vorhergehenden Ansprüche, wobei das oder die Edelmetallflächengebilde ebene Gegenstände sind, die ausgewählt sind aus der Gruppe bestehend aus Gittern, Lochplatten, Sieben und Netzen.

8. Verfahren nach einem der vorhergehenden Ansprüche, wobei das oder die Edelmetallflächengebilde eine Flächenausdehnung im Bereich von 0,25 bis 35 Quadratmeter aufweisen.

9. Verfahren nach einem der Ansprüche 8 oder 9, wobei das oder die Netze eine einem Gewebe, einem Gestrick oder einem Gewirk nachempfundene Struktur haben.

10. Verfahren nach Anspruch 10, wobei die Struktur des Netzes so ist, als basiere sie auf Runddraht und/oder auf Draht mit anderer als runder Querschnittsform,

11. Verfahren nach Anspruch 11, wobei die Drahtquerschnittsfläche querschnittsformunabhängig im Bereich von 400 bis 22500 $\mu m^2$ liegt.

12. Verfahren nach einem der vorhergehenden Ansprüche, wobei durch die Wahl digitaler 3D-Konstruktionsdaten im Rahmen der additiven Fertigung Einfluss genommen wird auf Oberflächenrauigkeit, Porosität und/oder Massivität des Edelmetallmaterials des oder der Edelmetallflächengebilde.

**Claims**

1. A method for producing a catalyst system for gas reactions, comprising at least one noble metal fabric that comprises gas-permeable openings, the method comprising the steps of:

(1) providing at least one noble metal powder consisting of at least substantially spherical noble metal particles, and
(2) repeatedly applying in layers the noble metal powder or powders provided in step (1) to a substrate in a build chamber, followed in each case by at least partially melting the relevant noble metal powder applied as a layer using high-energy radiation, and allowing the melted noble metal powder to solidify as part of an additive manufacturing process,
wherein the or each noble metal fabric comprising gas-permeable openings comprises an individual weight per unit area in the range of 25 to 2500 g/m$^2$,
wherein at least 80 % of the noble metal particles, based on their quantity, satisfy the condition

$$0.8 \leq d_{min}/d_{max} \leq 1.0,$$

where $d_{min}$ is the minimum diameter and $d_{max}$ is the maximum diameter of an individual noble metal particle, and wherein the noble metal particles of the noble metal powder or powders comprise a particle size distribution having a $d_{10}$ value of $\geq 5$ $\mu$m and a $d_{90}$ value of $\leq 80$ $\mu$m, wherein the particle size distribution in the form of a mass distribution sum curve is determined by laser diffraction, and wherein the noble metal of the noble metal particles of the noble metal powder or powders is selected from the group consisting of noble metal alloys of
platinum with 1-15 wt.% rhodium,
platinum with 2-15 wt.% rhodium and 0.1-20 wt.% palladium,
platinum with 2-15 wt.% rhodium, 0.1-20 wt.% palladium, and 0.1-2 wt.% ruthenium,
platinum with 2-15 wt.% rhodium, 0.1-20 wt.% palladium, and 0.1-5 wt.% iridium,
palladium with 3-15 wt.% platinum,
palladium with 1-20 wt.% platinum and 1-10 wt.% rhodium,
palladium with 1-25 wt.% tungsten, and
palladium with 1-15 wt.% nickel.

2. The method according to claim 1, wherein the noble metal particles are produced by an atomization process.

3. The method according to either of the preceding claims, wherein the $d_{50}$ value of the particle size distribution is in the range of 20 to 30 $\mu$m.

4. The method according to any of the preceding claims, wherein the $d_{10}$ value is $\geq 10$ $\mu$m and the $d_{90}$ value is $\leq 45$ $\mu$m.

5. The method according to claim 5, wherein the $d_{10}$ value is in the range of $\geq 10$ $\mu$m to $\leq 20$ $\mu$m and the $d_{90}$ value is in the range of $\geq 30$ $\mu$m to $\leq 45$ $\mu$m.

6. The method according to any of the preceding claims, wherein the catalyst system comprises or consists of one, a plurality of identical, or a plurality of different noble metal fabric or fabrics, and wherein the one, the plurality of identical, or the plurality of different noble metal fabric or fabrics constitutes or constitute a complete catalyst system for gas reactions, or a catalyst subsystem in the sense of a part of a complete catalyst system for gas reactions.

7. The method according to any of the preceding claims, wherein the noble metal fabric or fabrics is or are planar objects selected from the group consisting of grids, perforated plates, screens, and nets.

8. The method according to any of the preceding claims, wherein the noble metal fabric or fabrics comprises or comprise a superficial extent in the range of 0.25 to 35 square meters.

**9.** The method according to either claim 8 or 9, wherein the net or nets has or have a structure akin to a woven fabric, a knitted fabric, or a braided fabric.

**10.** The method according to claim 10, wherein the structure of the net is as if it were based on round wire and/or on wire having a cross-sectional shape other than round.

**11.** The method according to claim 11, wherein, independently of the cross-sectional shape, the wire cross-sectional area is in the range of 400 to 22,500 $\mu m^2$.

**12.** The method according to any of the preceding claims, wherein the selection of digital 3D design data within the context of the additive manufacturing process influences surface roughness, porosity, and/or solidity of the noble metal material of the noble metal fabric or fabrics.

**Revendications**

**1.** Procédé de préparation d'un système catalytique pour des réactions gazeuses, comprenant au moins une structure plane en métaux précieux présentant des ouvertures perméables aux gaz, comprenant les étapes :

(1) de fourniture d'au moins une poudre de métaux précieux composée de particules de métaux précieux au moins essentiellement sphériques, et
(2) de dépôt répété en couches de la ou des poudres de métaux précieux fournies à l'étape (1) sur un substrat dans un espace de montage, respectivement suivi par une fusion au moins partielle de la poudre de métaux précieux déposée en tant que couche, à l'aide d'un rayonnement à haute énergie, et le fait de laisser la poudre de métaux précieux fondue se solidifier dans le cadre d'une fabrication additive,
dans lequel la ou chaque structure plane en métaux précieux présentant des ouvertures perméables aux gaz présente un grammage spécifique dans la plage de 25 à 2 500 g/m², dans lequel au moins 80 % des particules de métaux précieux, par rapport à leur nombre, satisfont à la condition

$$0,8 \leq d_{min}/d_{max} \leq 1,0,$$

où $d_{min}$ représente le diamètre minimal et $d_{max}$ représente le diamètre maximal d'une particule de métaux précieux individuelle et où les particules de métaux précieux de la ou des poudres de métaux précieux présent une distribution granulométrique d'une valeur $d_{10} \geq 5$ $\mu m$ et d'une valeur $d_{90} \leq 80$ $\mu m$, la distribution granulométrique étant déterminée par diffraction laser sous la forme d'une courbe cumulative de distribution de masse et le métal précieux des particules de métaux précieux de la ou des poudres de métaux précieux étant choisi dans le groupe constitué par des alliages de métaux précieux de platine contenant 1 à 15 % en poids de rhodium,
de platine contenant 2 à 15 % en poids de rhodium et 0,1 à 20 % en poids de palladium,
de platine contenant 2 à 15 % en poids de rhodium, 0,1 à 20 % en poids de palladium et 0,1 à 2 % en poids de ruthénium,
de platine contenant 2 à 15 % en poids de rhodium, 0,1 à 20 % en poids de palladium et 0,1 à 5 % en poids d'iridium,
de palladium contenant 3 à 15 % en poids de platine,
de palladium contenant 1 à 20 % en poids de platine et 1 à 10 % en poids de rhodium,
de palladium contenant 1 à 25 % en poids de tungstène, et
de palladium contenant 1 à 15 % en poids de nickel.

**2.** Procédé selon la revendication 1, dans lequel les particules de métaux précieux sont obtenues par un procédé de dilution.

**3.** Procédé selon l'une des revendications précédentes, dans lequel la valeur $d_{50}$ de la distribution granulométrique se situe dans la plage de 20 à 30 $\mu m$.

**4.** Procédé selon l'une des revendications précédentes, dans lequel la valeur $d_{10}$ est $\geq 10$ $\mu m$ et la valeur $d_{90}$ est $\leq 45$ $\mu m$.

**5.** Procédé selon la revendication 5, dans lequel la valeur $d_{10}$ se situe dans la plage de $\geq 10$ $\mu m$ à $\leq 20$ $\mu m$ et la valeur $d_{90}$ se situe dans la plage de $\geq 30$ $\mu m$ à $\leq 45$ $\mu m$.

**6.** Procédé selon l'une des revendications précédentes, dans lequel le système catalytique comprend une ou plusieurs structures planes en métaux précieux, identiques ou différentes, ou est constitué de celles-ci, et dans lequel la ou les structures planes en métaux précieux, identiques ou différentes, représentent un système catalytique complet pour des réactions gazeuses ou un sous-système catalytique au sens d'une partie d'un système catalytique complet pour des réactions gazeuses.

**7.** Procédé selon l'une des revendications précédentes, dans lequel la ou les structures planes en métaux précieux sont des éléments plans choisis dans le groupe constitué par des grilles, des plaques perforées, des tamis et des filets.

8. Procédé selon l'une des revendications précédentes, dans lequel la ou les structures planes en métaux précieux présentent une extension superficielle située dans la plage de 0,25 à 35 mètres carrés.

9. Procédé selon l'une des revendications 8 ou 9, dans lequel le ou les filets ont une structure calquée sur un tissu, un tricot ou un tissu maillé.

10. Procédé selon la revendication 10, dans lequel la structure du filet donne l'impression d'être basée sur un fil rond et/ou un fil ayant une forme en section transversale autre que ronde.

11. Procédé selon la revendication 11, dans lequel la surface de section transversale de fil se situe, indépendamment de la forme en section transversale, dans la plage de 400 à 22 500 $\mu m^2$.

12. Procédé selon l'une des revendications précédentes, dans lequel le choix de données numériques de conception 3D dans le cadre de la fabrication additive exerce une influence sur la rugosité de surface, la porosité et/ou la massivité du matériau en métaux précieux de la ou des structures planes en métaux précieux.

**IN DER BESCHREIBUNG AUFGEFÜHRTE DOKUMENTE**

**In der Beschreibung aufgeführte Patentdokumente**

- WO 2012032325 A1
- DE 60201502 T2
- EP 0504723 A1